# EUROPEAN PATENT APPLICATION

(11) **EP 4 852 556 A1**
(43) Date of publication of application: **09.12.2026**
(21) Application number: 24920927.1
(22) Date of filing: 31.01.2024
(51) Int. Cl.: H04W 72/044

(54) **RESOURCE CONFIGURATION METHOD, TERMINAL, NETWORK DEVICE, COMMUNICATION SYSTEM AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2024/075091
(87) International publication number: WO 2025/160860

(57) **Abstract**

The present disclosure relates to a resource configuration method, a terminal, a network device, a communication system, and a storage medium. The resource configuration method comprises: a terminal receiving first configuration information, the first configuration information being used for performing first reference signal resource configuration for a plurality of ports; and determining a transmission configuration indicator (TCI) state corresponding to a first reference signal resource, wherein at least two ports among the plurality of ports of the first reference signal resource correspond to different TCI states. According to embodiments of the present disclosure, a plurality of different TCI states are configured for reference signal resources, so that one reference signal resource can be transmitted on the basis of a plurality of beams, thereby reducing the signaling overhead.

## Description

### TECHNICAL FIELD

The present disclosure relates to the field of communication technology, and in particular, to a method of configuring resource, and a terminal, a network device, a communication system, and a storage medium.

### BACKGROUND

In multipath propagation, such as Multiple Input Multiple Output (MIMO), of the 6th generation (6G) mobile networks, large-scale antenna arrays in high-frequency bands are introduced in order to provide higher spectral efficiency.

### SUMMARY

For a multi-port reference signal resource, how to configure resources so as to reduce resource overhead during beam measurement by a terminal is a problem.

Embodiments of the present disclosure propose a method of configuring resource, and a terminal, a network device, a communication system, and a storage medium therefor.

According to a first aspect of the embodiments of the present disclosure, a method of configuring resource is proposed. The method includes: receiving, by a terminal, first configuration information; and determining, based on the first configuration information, a transmission configuration indication (TCI) state corresponding to a first reference signal resource, wherein the first reference signal resource is a reference signal resource including a plurality of ports, and among the plurality of ports, at least two ports correspond to different TCI states.

According to a second aspect of the embodiments of the present disclosure, a method of configuring resource is proposed. The method includes: sending, by a network device, first configuration information, wherein the first configuration information is used to determine a transmission configuration indication (TCI) state corresponding to a first reference signal resource, wherein the first reference signal resource is a reference signal resource including a plurality of ports, and among the plurality of ports, at least two ports correspond to different TCI states.

According to a third aspect of the embodiments of the present disclosure, a method of configuring resource is proposed. The method includes: sending, by a network device, first configuration information; receiving, by a terminal, the first configuration information; and determining, by the terminal based on the first configuration information, a transmission configuration indication (TCI) state corresponding to a first reference signal resource, wherein the first reference signal resource is a reference signal resource including a plurality of ports, and among the plurality of ports, at least two ports correspond to different TCI states.

According to a fourth aspect of the embodiments of the present disclosure, a terminal is proposed. The terminal includes: a transceiver module configured to receive first configuration information; and a processing module configured to determine, based on the first configuration information, a transmission configuration indication (TCI) state corresponding to a first reference signal resource, wherein the first reference signal resource is a reference signal resource including a plurality of ports, and among the plurality of ports, at least two ports correspond to different TCI states.

According to a fifth aspect of the embodiments of the present disclosure, a network device is proposed. The network device includes: a transceiver module configured to send first configuration information, which is used to determine a transmission configuration indication (TCI) state corresponding to a first reference signal resource, wherein the first reference signal resource is a reference signal resource including a plurality of ports, and among the plurality of ports, at least two ports correspond to different TCI states.

According to a sixth aspect of the embodiments of the present disclosure, a terminal is proposed. The terminal includes: one or more processors; wherein the terminal is configured to perform the method of configuring resource according to the first aspect and any one of the embodiments thereof.

According to a seventh aspect of the embodiments of the present disclosure, a network device is proposed. The network device includes: one or more processors; wherein the network device is configured to perform the method of configuring resource according to the second aspect and any one of the embodiments thereof.

According to an eighth aspect of the embodiments of the present disclosure, a communication system is proposed. The communication system includes a terminal and a network device, wherein the terminal is configured to implement the method of configuring resource according to the first aspect and any one of the embodiments thereof, and the network device is configured to implement the method of configuring resource according to the second aspect and any one of the embodiments thereof.

According to a ninth aspect of the embodiments of the present disclosure, proposed is a storage medium storing instructions which, when executed on a communication device, cause the communication device to perform the method of configuring resource according to the first aspect and any one of the embodiments thereof, or the method of configuring resource according to the second aspect and any one of the embodiments thereof.

With the embodiments of the present disclosure, by configuring a plurality of different TCI states for a reference signal resource, a single reference signal resource may be transmitted based on a plurality of beams, thereby reducing signaling overhead.

### BRIEF DESCRIPTION OF THE DRAWINGS

In order to illustrate the technical solutions in the embodiments of the present disclosure more clearly, the drawings required for describing the embodiments are introduced below. The following drawings merely show some embodiments of the present disclosure and are not restrictive of the protection scope of the present disclosure.
FIG. 1A is a schematic diagram illustrating an architecture of a communication system according to an embodiment of the present disclosure.
FIG. 1B is a schematic diagram of electromagnetic field division according to an embodiment of the present disclosure.
FIG. 1C is a schematic diagram of far-field beam propagation according to an embodiment of the present disclosure.
FIG. 1D is a schematic diagram of near-field beam propagation according to an embodiment of the present disclosure.
FIG. 2 is an interaction diagram of a method of configuring resource according to an embodiment of the present disclosure.
FIG. 3A is a flow diagram of the method of configuring resource according to an embodiment of the present disclosure.
FIG. 3B is a flow diagram of the method of configuring resource according to an embodiment of the present disclosure.
FIG. 3C is a flow diagram of the method of configuring resource according to an embodiment of the present disclosure.
FIG. 4A is a flow diagram of the method of configuring resource according to an embodiment of the present disclosure.
FIG. 4B is a flow diagram of the method of configuring resource according to an embodiment of the present disclosure.
FIG. 4C is a flow diagram of the method of configuring resource according to an embodiment of the present disclosure.
FIG. 5 is an interaction diagram of the method of configuring resource according to an embodiment of the present disclosure.
FIG. 6A is a structural schematic diagram of a terminal according to an embodiment of the present disclosure.
FIG. 6B is a structural schematic diagram of a network device according to an embodiment of the present disclosure.
FIG. 7A is a structural schematic diagram of a communication device according to an embodiment of the present disclosure.
FIG. 7B is a structural schematic diagram of a chip according to an embodiment of the present disclosure.

### DETAILED DESCRIPTION

Embodiments of the present disclosure propose a method of configuring resource, a terminal, a network device, a communication system, and a storage medium.

In a first aspect, embodiments of the present disclosure propose a method of configuring resource. The method includes: receiving, by a terminal, first configuration information; and determining, based on the first configuration information, a transmission configuration indication (TCI) state corresponding to a first reference signal resource, and the first reference signal resource is a reference signal resource including a plurality of ports, and among the plurality of ports, at least two ports correspond to different TCI states.

In the above embodiment, with the embodiments of the present disclosure, a plurality of different TCI states can be configured for a multi-port reference signal resource, thereby enabling a single reference signal resource to be transmitted based on a plurality of transmit beams of a base station and/or a plurality of receive beams of the terminal, so that CSI measurement and feedback based on a plurality of transmit and receive beams based on a single reference signal may be performed by a near-field terminal, which reduces signaling overhead and improves transmission performance.

In combination with some embodiments of the first aspect, in some embodiments, the terminal receives second configuration information, and the second configuration information is used to configure N sets of reference signal resources, or the second configuration information is used to configure a second reference signal resource including N ports, and N is an integer greater than or equal to 2; the terminal sends, based on the second configuration information, a beam report based on a beam group, and the beam report indicates at least one beam group, and at least two second reference signal resources included in the at least one beam group correspond to different sets of reference signal resources, or at least two ports included in the at least one beam group correspond to different port groups or different ports.

In the above embodiment, by enhancing the content of the beam report, the network device may be informed which beams the terminal is capable of simultaneously transmitting and/or receiving, thereby enabling TCI states to be configured by the network device.

In combination with some embodiments of the first aspect, in some embodiments, the TCI state corresponding to the first reference signal resource includes: a TCI state corresponding to a port, and/or a TCI state corresponding to a port group.

In the above embodiment, on this basis, it can be determined whether the TCI state corresponding to each configured port or port group meets a preset requirement.

In combination with some embodiments of the first aspect, in some embodiments, the TCI state corresponding to the port includes: a TCI state corresponding to a port indicated by the first configuration information, and/or a TCI state corresponding to a port indicated by third configuration information, and the third configuration information is different from the first configuration information, and the third configuration information is different from the first configuration information.

In combination with some embodiments of the first aspect, in some embodiments, the TCI state corresponding to the port group includes: a TCI state corresponding to a port group indicated by the first configuration information, and/or a TCI state corresponding to a port group indicated by third configuration information.

In combination with some embodiments of the first aspect, in some embodiments, the TCI state corresponding to the port group includes: a port identifier corresponding to the port group, and the port identifier is determined based on a default rule, or the port identifier is determined based on fourth configuration information, and the fourth configuration information is different from the first configuration information.

In combination with some embodiments of the first aspect, in some embodiments, the port identifier is determined based on the default rule, which includes at least one of: a port group corresponding to a port group identifier includes N ports having consecutive port identifiers; a port group corresponding to a port group identifier includes N ports having equally spaced port identifiers; port identifiers included in a port group corresponding to a port group identifier are determined based on a protocol, and N is an integer greater than or equal to 2.

In combination with some embodiments of the first aspect, in some embodiments, the port identifier is determined based on the fourth configuration information, which includes at least one of: a number of the ports included in each port group; the port identifiers of the ports included in each port group.

In combination with some embodiments of the first aspect, in some embodiments, each beam group in the beam report includes at least one of: K second reference signal resource identifiers; L port identifiers; M port group identifiers; a quality parameter, and K is an integer less than or equal to N, L is an integer less than or equal to N, M is an integer less than or equal to N, the K second reference signal resource identifiers come from different sets of reference signal resources among the N sets of reference signal resources, and the L port identifiers come from different port groups among the N port groups.

In combination with some embodiments of the first aspect, in some embodiments, the second configuration information is further used for configuring at least one of: the beam group for uplink communication transmission; and the beam group for downlink communication transmission.

In the above embodiment, with the second configuration information, the communication scenario for which the beam group is used can be clarified.

In combination with some embodiments of the first aspect, in some embodiments, the first reference signal resource includes: a channel state information reference signal (CSI-RS), or
a demodulation reference signal (DMRS).

In combination with some embodiments of the first aspect, in some embodiments, the first configuration information is radio resource control (RRC) signaling.

In combination with some embodiments of the first aspect, in some embodiments, the third configuration information includes at least one of: RRC signaling; a medium access control control element (MAC CE); downlink control information (DCI).

In a second aspect, a method of configuring resource is provided. The method includes: sending, by a network device, first configuration information, and the first configuration information is used to determine a TCI state corresponding to a first reference signal resource, and the first reference signal resource is a reference signal resource including a plurality of ports, and among the plurality of ports, at least two ports correspond to different TCI states.

In the above embodiment, through the embodiments of the present disclosure, a plurality of different TCI states can be configured for a multi-port reference signal resource, thereby enabling a single reference signal resource to be transmitted based on a plurality of transmit beams of a base station and/or a plurality of receive beams of the terminal, so that CSI measurement and feedback based on a plurality of transmit and receive beams based on a single reference signal may be performed by a near-field terminal, which reduces signaling overhead and improves transmission performance.

In combination with some embodiments of the second aspect, in some embodiments, the method further includes: sending, by the network device, second configuration information, and the second configuration information is used to configure N sets of reference signal resources, or the second configuration information is used to configure a second reference signal resource including N ports, and N is an integer greater than or equal to 2; receiving, by the network device, a beam report, and the beam report is sent by a terminal based on the second configuration information, the beam report indicates at least one beam group, and at least two second reference signal resources included in the at least one beam group correspond to different sets of reference signal resources, or at least two ports included in the at least one beam group correspond to different port groups or different ports.

In combination with some embodiments of the second aspect, in some embodiments, the TCI state corresponding to the first reference signal resource includes: a TCI state corresponding to a port, and/or a TCI state corresponding to a port group.

In combination with some embodiments of the second aspect, in some embodiments, the TCI state corresponding to the port includes: a TCI state corresponding to each port indicated by the first configuration information, and/or a TCI state corresponding to each port indicated by third configuration information, and the third configuration information is different from the first configuration information.

In combination with some embodiments of the second aspect, in some embodiments, the TCI state corresponding to the port group includes: a TCI state corresponding to a port group indicated by the first configuration information, and/or a TCI state corresponding to a port group indicated by third configuration information.

In combination with some embodiments of the second aspect, in some embodiments, the TCI state corresponding to the port group includes: a port identifier corresponding to the port group, and the port identifier is determined based on a default rule, or the port identifier is determined based on fourth configuration information, and the fourth configuration information is different from the first configuration information.

In combination with some embodiments of the second aspect, in some embodiments, each beam group in the beam report includes at least one of: M1 second reference signal resource identifiers; M2 port identifiers; M3 port group identifiers; a quality parameter, and M1 is an integer less than or equal to N, M2 is an integer less than or equal to N, M3 is an integer less than or equal to N, the M1 second reference signal resource identifiers come from different sets of reference signal resources among the N sets of reference signal resources, and the M2 port identifiers come from different port groups among the N port groups.

In combination with some embodiments of the second aspect, in some embodiments, the second configuration information is further used for at least one of: the beam group for uplink communication transmission; the beam group for downlink communication transmission.

In combination with some embodiments of the second aspect, in some embodiments, the first reference signal resource includes: a CSI-RS, or a DMRS.

In combination with some embodiments of the second aspect, in some embodiments, the first configuration information is RRC signaling.

In combination with some embodiments of the second aspect, in some embodiments, the third configuration information includes at least one of: RRC signaling; MAC CE; DCI.

In a third aspect, a method of configuring resource is provided. The method includes: sending, by a network device, first configuration information; receiving, by a terminal, the first configuration information; and determining, by the terminal based on the first configuration information, a TCI state corresponding to a first reference signal resource, and the first reference signal resource is a reference signal resource including a plurality of ports, and among the plurality of ports, at least two ports correspond to different TCI states.

In a fourth aspect, a terminal is provided. The terminal includes: a transceiver module configured to receive first configuration information; and a processing module configured to determine, based on the first configuration information, a TCI state corresponding to a first reference signal resource, and the first reference signal resource is a reference signal resource including a plurality of ports, and among the plurality of ports, at least two ports correspond to different TCI states.

In a fifth aspect, a network device is provided. The network device includes: a transceiver module configured to send first configuration information, and the first configuration information is used to determine a TCI state corresponding to a first reference signal resource, and the first reference signal resource is a reference signal resource including a plurality of ports, and among the plurality of ports, at least two ports correspond to different TCI states.

In a sixth aspect, a terminal is provided. The terminal includes: one or more processors; and the terminal is configured to perform the method of configuring resource according to the first aspect and any one of the embodiments thereof.

In a seventh aspect, a network device is provided. The network device includes: one or more processors; and the network device is configured to perform the method of configuring resource according to the second aspect and any one of the embodiments thereof.

According to an eighth aspect of the embodiments of the present disclosure, a communication system is proposed. The communication system includes a terminal and a network device, and the terminal is configured to implement the method of configuring resource according to the first aspect and any one of the embodiments thereof, and the network device is configured to implement the method of configuring resource according to the second aspect and any one of the embodiments thereof.

According to a ninth aspect of the embodiments of the present disclosure, proposed is a storage medium storing instructions which, when executed on a communication device, cause the communication device to perform the method of configuring resource according to the first aspect and any one of the embodiments thereof, or the method of configuring resource according to the second aspect and any one of the embodiments thereof.

In a tenth aspect, embodiments of the present disclosure propose a program product, which, when executed by a communication device, causes the communication device to perform the method described in optional implementations of the first aspect or the second aspect.

In an eleventh aspect, embodiments of the present disclosure propose a computer program, which, when run on a computer, causes the computer to perform the method described in optional implementations of the first aspect or the second aspect.

In a twelfth aspect, embodiments of the present disclosure provide a chip or a chip system. The chip or chip system includes a processing circuit configured to perform the method described in optional implementations of the above first aspect or second aspect.

It can be understood that the terminal, access network device, first network element, other network elements, core network device, communication system, storage medium, program product, computer program, chip or chip system involved in the embodiments of the present disclosure are all used to implement the method in embodiments of the disclosure. Thus, regarding beneficial effects they may achieve, reference may be made to the beneficial effects in the corresponding methods, which will not be repeated herein.

Embodiments of the present disclosure propose a method of configuring resource, an apparatus, a device, and a storage medium therefor. In some embodiments, terms such as "communication method" and "information processing method", "method of configuring resource", and the like may be used interchangeably; terms such as "communication apparatus" and "information processing apparatus", "resource configuring apparatus", and the like may be used interchangeably; terms such as "information processing system", "communication system", and the like may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, respective embodiments may be arbitrarily combined, for example, some or all steps of different embodiments may be arbitrarily combined, and a certain embodiment may be arbitrarily combined with the optional implementations of other embodiments.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In embodiments of the disclosure, "a plurality of" refers to two or more.

In some embodiments, the terms "at least one of", "one or more", "a plurality of", "multiple" etc. may be used interchangeably.

In embodiments of the disclosure, recitations such as "at least one of A and B", "A and/or B", "in one case A, in another case B" and "in response to one case A, in response to another case B" may, depending on the context, include the following technical solutions: executing A regardless of B, that is, in some embodiments, A; executing B regardless of A, that is, in some embodiments, B; selectively executing A or B, that is, in some embodiments, one is selected from A and B to be executed; executing both A and B, that is, in some embodiments, both A and B are executed. The same applies similarly when there are more branches such as A, B, C, etc.

In some embodiments, recitations such as "A or B" and the like may, depending on the context, include the following technical solutions: in some embodiments, executing A regardless of B, that is, in some embodiments, executing B regardless of A, that is, in some embodiments, B; selectively executing A or B, that is, in some embodiments, one is selected from A and B to be executed. The same applies similarly when there are more branches such as A, B, C, etc.

The prefixes such as "first" and "second" in embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field"and the "second field"does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus, etc. may be interpreted as physical or virtual, and their names are not limited to the names recorded in embodiments. The terms such as "apparatus", "equipment", "device", "circuit", "network element", "node", "function", "unit", "section", "system", "network", "chip", "chip system", "entity", and "subject" may be used interchangeably.

In some embodiments, "network" can be interpreted as devices contained within the network (e.g., access network devices, core network devices, etc.).

In some embodiments, the term of "access network device (AN device)"may be referred to as "radio access network device (RAN device)", "base station (BS)", "radio base station", "fixed station". In some embodiments, they may be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like.

In some embodiments, the term of "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

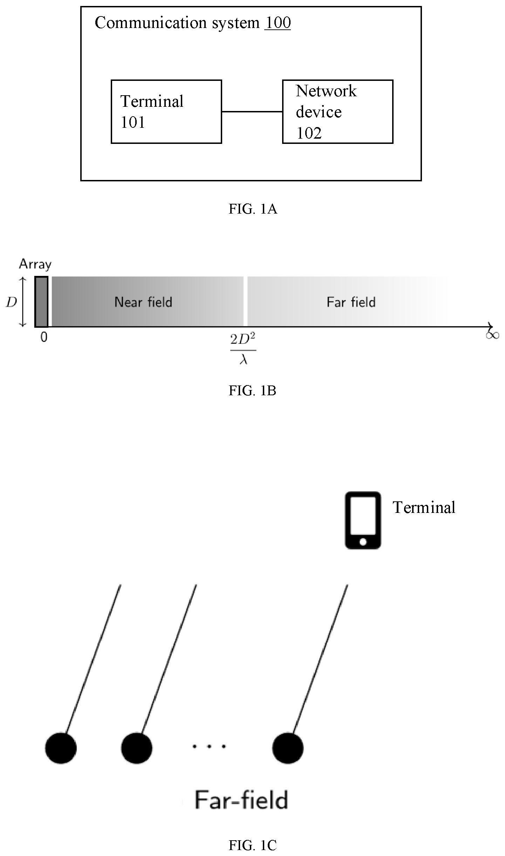

FIG. 1A is a schematic diagram illustrating an architecture of a communication system according to an embodiment of the disclosure.

As shown in FIG. 1A, the communication system 100 may include a terminal 101 and a network device 102.

In some embodiments, the terminal 101 includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the network device 102 may include at least one of an access network device and a core network device.

In some embodiments, the access network device may be, for example, a node or device that accesses a terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an Open RAN base station, a Cloud RAN base station, a base station in other communication systems, an access node in a Wi-Fi system, but is not limited thereto.

In some embodiments, the technical solution of the disclosure may be applicable to an Open RAN architecture. In this case, the interfaces between or within the access network devices involved in embodiments of the disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited herein.

In some embodiments, the core network device may be a device including one or more network elements, or may be a plurality of devices or device groups, respectively including all or part of the one or more network elements described above.The network element may be virtual or physical. The core network may include, for example, at least one of an evolved packet core (EPC), a 5G core network (5GCN), or a next generation core (NGC).

It may be understood that the communication system described in embodiments of the disclosure aims to more clearly illustrate the technical solution of embodiments of the disclosure, and does not constitute a limitation on the technical solution proposed in embodiments of the disclosure. A person skilled in the art may know that with the evolution of the system architecture and the emergence of new service scenarios, the technical solution proposed in embodiments of the disclosure are also applicable to similar technical problems.

The following embodiments of the disclosure may be applied to the communication system 100 or part of the subjects shown in FIG. 1A, but are not limited herein. The subjects shown in FIG. 1A are examples, and the communication system may include all or part of the subjects in FIG. 1A, or may include other subjects other than those shown in FIG. 1A. The number and form of the subjects are arbitrary. The connection relationships between the subjects are examples. The subjects may be connected or disconnected, and the connection may be in any manner, which may be a direct connection or an indirect connection, or may be a wired connection or a wireless connection.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of a plurality of systems (e.g., a combination of LTE or LTE-A with 5G) may be applied.

In multipath propagation, such as Multiple Input Multiple Output (MIMO), of the 6th generation (6G) mobile networks, large-scale antenna arrays in high-frequency bands are introduced in order to provide higher spectral efficiency. Large-scale antennas provides a greater beamforming gain, and effectively compensates for the transmission loss caused by high-frequency bands.

For a given antenna array, the electromagnetic (EM) field of the antenna array may be divided into a near field and a far field. FIG. 1B is a schematic diagram of electromagnetic field division according to an embodiment of the present disclosure. As shown in FIG. 1B, there is a boundary between the near field and the far field. The boundary is referred to as the Rayleigh distance, and the solution formula for the boundary is $\frac{2 {D}^{2}}{λ}$, and, D represents the antenna aperture of the antenna array, and λ represents the wavelength.

In some embodiments, for a terminal in a far-field communication scenario, the electromagnetic waves arriving at the terminal from different antenna ports or antenna elements are plane waves. FIG. 1C is a schematic diagram of far-field beam propagation according to an embodiment of the present disclosure. As shown in FIG. 1C, in a far-field communication scenario, the beam for the terminal is a two-dimensional (2D) directional beam directing toward the target terminal. For any path in multipath propagation, the time and phase of arrival at the receive antenna array of the terminal are equally spaced.

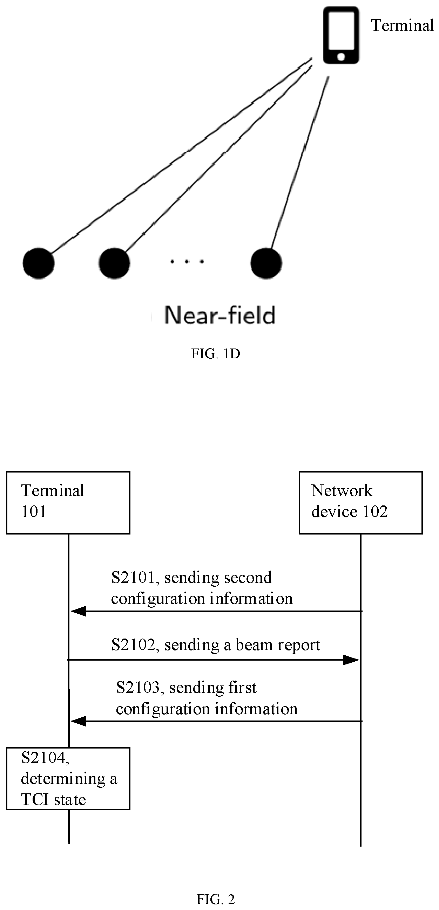

In some embodiments, for a terminal in a near-field communication scenario, the electromagnetic waves received by the terminal are spherical waves. FIG. 1D is a schematic diagram of near-field beam propagation according to an embodiment of the present disclosure. As shown in FIG. 1D, in a near-field communication scenario, the beam for the terminal is a three-dimensional (3D) beam surrounding the target terminal. For any path in multipath propagation, the time and phase of arrival at the receive antenna array of the terminal are no longer equally spaced.

That is, for the far-field terminal, the plurality of ports arrive at the terminal in the same direction. For the near-field terminal, beams from different ports among the plurality of ports arrive at the terminal in different directions.

For near-field or far-field communication scenarios, it is assumed that the network device has 32 transmit beam directions. For far-field communication scenarios, it is only necessary to send 32 reference signal resources based on the 32 beam directions via any one of the ports. In contrast, for near-field communication scenarios, the distance to the terminal corresponding to the first beam direction (one of the 32 beam directions) sent by the network device at the first port differs from the distance to the terminal corresponding to the first beam direction set by the network device at the second port. Accordingly, it is necessary to send 32 beam directions at each port respectively, by the network device.

It may be understood that if a conventional beam management approach is employed, it is necessary to send, by the network device, reference signals for beam measurement in a single-port manner, and the scanning time of the terminal will increase exponentially with the increase in the number of ports, which causes a large amount of resource overhead. Therefore, in order to reduce such resource overhead, communication is typically performed based on multi-port reference signal resources.

In a conventional 5G new radio (NR) communication system, the TCI state corresponding to each reference signal is only 1, and the TCI state corresponding to a channel is at most 2. However, in large-scale antenna scenarios, different antenna groups may correspond to different analog beams. In this case, even the reference signal, such as the multi-port reference signal, may also correspond to a plurality of TCI states. Therefore, how to configure reference signals corresponding to the plurality of TCI states remains a problem to be solved.

FIG. 2 is an interaction diagram of a method of configuring resource according to an embodiment of the present disclosure. As shown in FIG. 2, an embodiment of the present disclosure relates to a method of configuring resource for the communication system 100. The above method includes following steps.

In the Step S2101, the network device 102 sends the second configuration information to the terminal 101.

In some embodiments, the terminal 101 receives the second configuration information sent by the network device 102.

It should be noted that the second configuration information is used to configure reference signals for beam measurement. In this way, after measuring the reference signals for beam measurement, the terminal 101 reports the results to the network device 102, thereby enabling the network device 102 to select the port corresponding to the reference signal that meets the requirement as the TCI state. That is, the second configuration information may be understood as reference signal resources configured for beam measurement for obtaining the reference signal corresponding to the TCI state.

In some embodiments, the second configuration information is used to configure or indicate N sets of reference signal resources, or to configure or indicate a second reference signal resource including N ports, and N is an integer greater than or equal to 2.

It should be noted that the reference signals corresponding to the N sets of reference signal resources configured or indicated by the second configuration information are reference signals used for performing beam measurement, and the configured second reference signal resources are also reference signals used for performing beam measurement.

In some embodiments, based on the second configuration information, the terminal performs a beam reporting based on the beam group.

In some embodiments, terms such as "beam report (reporting) based on a beam group", "beam group report", "beam group measurement report", "beam report", etc. may be used interchangeably.

It may be understood that, after the terminal 101 performs beam measurement based on the configured reference signals, a corresponding measurement report (i.e., the beam report based on a beam group) may be formed for reporting to the network device 102. This enables the network device 102 to select, based on the beam report, the port corresponding to the reference signal that meets the requirement (e.g., the quality parameter meets the requirement) and configure it through the TCI state.

In some embodiments, the beam report includes at least one beam group, and two reference signal resources included in the at least one beam group correspond to different sets of reference signal resources, or at least two ports included in the at least one beam group correspond to different port groups or different ports.

It may be understood that, in order to ensure normal communication transmission, the plurality of TCI states corresponding to the reference signal needs to be received simultaneously by the terminal 101. In order to enable the plurality of TCI states to be received simultaneously by the terminal 101, the terminal 101 needs to report to the network device 102 which beams can be used for simultaneous reception. For example, in the related art, in a case where a reference signal resource group that the terminal can receive simultaneously is reported by the terminal and contains only two reference signal resource identifiers (IDs), this informs the network device that the beams sent by the network device corresponding to the two reference signal resources can be simultaneously received by the terminal, or informs the network device that the beams corresponding to the two reference signal resources can be simultaneously sent by the terminal. Therefore, for the beam report, it is necessary to include, in a beam group, at least two reference signal resources corresponding to different sets of reference signal resources, or to include, in one beam group, at least two ports corresponding to different port groups or at least two different ports, so as to inform the network device 102 that the beam corresponding to the reference signal resource and/or the ports (group) can be simultaneously sent and/or simultaneously received by the terminal 101.

For example, the beam report includes reference signal resource a# and reference signal resource b#. The reference signal resource a# corresponds to a set of reference signal resources A#, and the reference signal resource b# corresponds to a set of reference signal resources B#. The terminal 101 reports this beam report to the network device 102, i.e., informs the network device 102 that the terminal 101 can simultaneously receive and/or send the beam corresponding to reference signal resource a# and the beam corresponding to reference signal resource b#.

As another example, the beam report includes port 1# and port 2#. The terminal 101 reports this beam report to the network device 102, i.e., informs the network device 102 that the terminal 101 can simultaneously receive and/or send the beam corresponding to port 1# and the beam corresponding to port 2#. Optionally, port 1# corresponds to a first port group, and port 2# corresponds to a second port group. Alternatively, there is no protocol configuration of the correspondence between the port groups and port 1# as well as port 2#.

In some embodiments, for each beam group in the beam report, the beam group includes at least one of: K second reference signal resource identifiers; L port identifiers; M port group identifiers; a quality parameter, and K is an integer less than or equal to N, L is an integer less than or equal to N, M is an integer less than or equal to N, the K second reference signal resource identifiers come from different sets of reference signal resources among the N sets of reference signal resources, and the L port identifiers come from different port groups among the N port groups.

It can be understood that the quality parameter includes, for example: Layer 1 Reference Signal Received Power (L1-RSRP), and/or Layer 1 Signal-to-noise And Interference Ratio (L1-SINR).

In some embodiments, the quality parameter may correspond to the reference signal resource identifier, the port identifier, and the port group identifier. That is, the quality parameter can be understood as: the quality parameter corresponding to the reference signal resource identifier, the quality parameter corresponding to the port identifier corresponding to the reference signal resource identifier, and the quality parameter corresponding to the port group identifier corresponding to the reference signal resource identifier.

Based on this, each beam group in the beam report may include at least one of: K second reference signal resource identifiers and L1-RSRP corresponding to the K second reference signal resource identifiers; K second reference signal resource identifiers and L1-SINR corresponding to the K second reference signal resource identifiers; K port identifiers and L1-RSRP corresponding to the L port identifiers; L port identifiers and L1-SINR corresponding to the L port identifiers; M port group identifiers and L1-RSRP corresponding to the M port identifiers; M port group identifiers and L1-SINR corresponding to the M port identifiers.

In this way, the network device 102 can determine, based on the beam report, the quality parameter information in the report and the reference signal resource corresponding to the quality parameter information, and can then select the reference signal resource whose quality parameter meets a preset requirement. Moreover, for the reference signal resource having the plurality of ports (or port groups), the quality parameter corresponding to the port (or port group) can also be determined.

In some embodiments, the second configuration information is further used for at least one of: configuring the reporting of the beam group for uplink communication transmission; configuring the reporting of the beam group for downlink communication transmission.

Optionally, if not indicated by the second configuration information, the terminal 101 may report, in the beam report, each beam group for uplink communication transmission, for downlink communication transmission, or for both uplink and downlink communication transmission.

In some embodiments, terms such as "obtain", "acquire", "get", "receive", "transmit", "bidirectional transmission", "send and/or receive" may be used interchangeably, and may be interpreted as receiving from another entity, obtaining from a protocol, obtaining from a higher layer, acquiring by self-processing, autonomous implementation, etc.

In some embodiments, terms such as "send", "transmit", "report", "deliver", "transfer", "bidirectional transmission", and "send and/or receive" may be used interchangeably.

In some embodiments, the names of information are not limited to those recorded in the embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc. may be used interchangeably.

In some embodiments, terms such as "synchronization signal (SS)", "synchronization signal block (SSB)", "reference signal (RS)", etc. may be used interchangeably.

In some embodiments, terms such as "up", "uplink ", "physical uplink", etc. may be used interchangeably; terms such as "down", "downlink", "physical downlink", etc. may be used interchangeably; terms such as "side", "sidelink", "side communication", "sidelink communication", "direct", "direct link", "direct communication", "direct link communication", etc. may be used interchangeably.

In the Step S2102, the terminal 101 sends the beam report to the network device 102.

In some embodiments, the network device 102 receives the beam report sent by the terminal 101.

It can be understood that the content included in the beam report has been described in the relevant embodiments of step S2101, and will not be repeated herein.

In some embodiments, after receiving the beam report, the network device 102 may select, in the beam report, the port corresponding to the reference signal that meets the preset requirement as the port corresponding to the TCI state. On this basis, the corresponding TCI states are configured for other reference signals.

In Step S2103, the network device 102 sends the first configuration information to the terminal 101.

In some embodiments, the terminal 101 receives the first configuration information sent by the network device 102.

In some embodiments, the first configuration information is used for configuring the first reference signal resource, and the first reference signal resource is a reference signal resource including a plurality of ports, and among the plurality of ports of the first reference signal resource, at least two ports correspond to different TCI states.

In some embodiments, the first configuration information is RRC signaling.

In some embodiments, the first reference signal resource includes: CSI-RS, or DMRS.

In some embodiments, the first reference signal resource may be at least one of a DMRS of a physical downlink control channel (PDCCH), a DMRS of a physical downlink shared channel (PDSCH), a DMRS of a physical uplink control channel (PUCCH), and a DMRS of a physical uplink shared channel (PUSCH).

In some embodiments, "reference signal resource including a plurality of ports" and "first reference signal resource" may be used interchangeably.

It should be noted that at least two ports among the plurality of ports correspond to different TCI states, meaning that the TCI states ultimately corresponding to the two ports for transmission are different, whereas the candidate plurality of TCI states or TCI state lists corresponding during the configuration process may be selected to be the same or different.

Different TCI configuration procedures are illustrated below, to facilitate understanding that the TCI states ultimately corresponding to the two ports for transmission are different.

For example, the TCI state configuration procedure based on RRC signaling and the MAC CE is taken as an example. RRC is used to configure a TCI state list, and MAC CE is used to activate the TCI state corresponding to each port for transmission. The TCI states ultimately corresponding to the above two ports for transmission are the TCI states after activation by the MAC CE.

As another example, the TCI state configuration procedure being based on RRC, MAC CE, and DCI is taken as an example. RRC is used to configure a TCI state list, and MAC CE is used to activate the correspondence between a plurality of candidate TCI states and codepoints of a TCI indication field in DCI, and DCI further indicates the codepoint of the TCI indication field. In this case, the TCI state corresponding to the codepoint indicated by DCI is the TCI state ultimately used for transmission.

As another example, the configuration procedure of a unified TCI state is taken as an example. After the unified TCI state corresponding to the first reference signal resource is configured based on the first configuration information, additional instructions (e.g., other configuration information besides the first configuration information) are further required to indicate which one of the plurality of unified TCI states corresponds to each reference signal resource or each set of reference signal resources, so that the TCI states ultimately corresponding to the two ports for transmission are different.

In Step S2104, the terminal 101 determines the TCI state.

In some embodiments, the terminal 101 determines the TCI state corresponding to the first reference signal resource.

In some embodiments, determining, by the terminal 101, the TCI state corresponding to the first reference signal resource includes at least one of :
- A) determining a TCI state corresponding to a port.
- B) determining a TCI state corresponding to a port group.

With respect to -A), in some embodiments, determining the TCI state corresponding to the port may refer to determining the TCI state corresponding to some ports, or determining the TCI state corresponding to all ports.

The step of determining the TCI state corresponding to some ports, for example, includes: determining the TCI state indicated by the first configuration information corresponding to some ports, and/or determining the TCI state indicated by the third configuration information corresponding to some ports. For example, the number of ports corresponding to the reference signal resource is a, but only b ports among them correspond to the TCI state indicated by the first configuration information ( a is an integer greater than or equal to 1, b is an integer greater than or equal to 1, and a is greater than b). Then it is only necessary to determine the TCI state for the ports for which the TCI state has been configured, without needing to determine the TCI state for all ports, thereby saving resource overhead.

The step of determining the TCI state corresponding to all ports, for example, includes: determining the TCI state indicated by the first configuration information corresponding to each port, and/or determining the TCI state indicated by the third configuration information corresponding to each port. For example, the number of ports corresponding to the reference signal resource is a, and all ports of the reference signal resource correspond to the TCI state indicated by the first configuration information ( a is an integer greater than or equal to 1). Then the determination of the TCI corresponding to each port can clarify the TCI state corresponding to respective ports.

In some embodiments, the first configuration information and the third configuration information are not the same configuration information. For example, the first configuration information is only used to configure the time-frequency resources corresponding to the reference signal resource, the reference signal identifier, the port identifier or the number of ports, etc. The third configuration information is used to configure the TCI state for indicating at least one of the reference signal resource identifier, the port identifier, and the port group identifier, and to configure the mapping relationship between the TCI state and the port or port group corresponding to the reference signal resource in the first configuration information, etc.

In some embodiments, the third configuration information may also be the first configuration information.

Optionally, the third configuration information may be, for example, at least one of: RRC signaling, MAC CE, and DCI.

With respect to -B), in some embodiments, determining the TCI state corresponding to the port group may include determining the TCI state corresponding to some ports, or determining the TCI state corresponding to all ports.

The step of determining the TCI state corresponding to some ports, for example, includes: determining the TCI state indicated by the first configuration information corresponding to some ports, and/or determining the TCI state indicated by the third configuration information corresponding to some ports. For example, the number of port groups corresponding to the reference signal resource is a, but only b port groups among them correspond to the TCI state indicated by the first configuration information ( a is an integer greater than or equal to 1, b is an integer greater than or equal to 1, and a is greater than b). Then it is only necessary to determine the TCI state for the port groups for which the TCI state has been configured, without needing to determine the TCI state for all port groups, thereby saving resource overhead. For example, the number of port groups corresponding to the reference signal resource is a, and all port groups of the reference signal resource correspond to the TCI state indicated by the first configuration information ( a is an integer greater than or equal to 1). Then determination of the TCI corresponding to each port group can clarify the TCI state corresponding to respective port groups.

The step of determining the TCI state corresponding to all ports, for example, includes: determining the TCI state indicated by the first configuration information corresponding to each port group, and/or determining the TCI state indicated by the third configuration information corresponding to each port group. In some embodiments, determining the TCI state corresponding to the port group includes determining the TCI state corresponding to some port groups, or determining the TCI state corresponding to each port group.

In some embodiments, determining the TCI state corresponding to some port groups includes: determining the port identifier corresponding to some port groups based on a default rule, or determining the port identifier corresponding to some port groups based on fourth configuration information.

In some embodiments, determining the TCI state corresponding to each port group includes: determining the port identifier corresponding to each port group based on a default rule, or determining the port identifier corresponding to each port group based on fourth configuration information.

For example, determining the port identifier corresponding to each port group based on the default rule may be at least one of the following:
1) The port group corresponding to each port group identifier includes N ports having consecutive port identifiers ( N is an integer greater than or equal to 2).
   For example, the reference signal resource has 8 ports, respectively: port 0#, port 1#, port 2#, port 3#, port 4#, port 5#, port 6#, and port 7#. If the port groups are determined based on consecutive port identifiers, the 8 ports are determined as two port groups, for example, as follows: The reference signal resource has two port groups, port group A# and port group B#. the ports included in port group A# are: port 0#, port 1#, port 2#, and port 3#; and the ports included in port group B# are: port 4#, port 5#, port 6#, and port 7#.
2) The port group corresponding to each port group identifier includes N ports having equally spaced port identifiers.
   For example, the reference signal resource has 8 ports, respectively: port 0#, port 1#, port 2#, port 3#, port 4#, port 5#, port 6#, and port 7#. If the port groups are determined based on equally spaced port identifiers (e.g., with an interval of 1), the 8 ports are determined as two port groups, for example, the details are as follows: The reference signal resource has two port groups, port group A# and port group B#. The ports included in port group A# are: port 0#, port 2#, port 4#, and port 6#; and the ports included in port group B# are: port 1#, port 3#, port 5#, and port 7#.
3) The port identifiers included in each port group in the port groups corresponding to port group identifier are determined based on a protocol.

For example, the reference signal resource has 8 ports, respectively: port 0#, port 1#, port 2#, port 3#, port 4#, port 5#, port 6#, and port 7#. If the port groups are determined based on the protocol (e.g., the protocol presets that the plurality of ports are divided into the same port group), for example, the details are as follows: The reference signal resource has two port groups, port group A# and port group B#. The ports included in port group A# are: port 0#, port 1#, port 4#, and port 5#; and the ports included in port group B# are: port 2#, port 3#, port 6#, and port 7#.

In some embodiments, the correspondence determined based on the fourth configuration information (the correspondence between the ports and the port groups), may be at least one of: the number of the ports included in each port group; the port identifiers of the ports included in each port group.

It should be noted that the fourth configuration information may be the first configuration information, or may be other configuration information besides the first configuration information.

In some embodiments, if the port identifiers of the ports included in the port group corresponding to each port group identifier are consecutive, then through the fourth configuration information, the number of the ports included in each port group is configured, so that the configuration of that port group can be achieved, in which the starting port identifier is determined by default.

For example, the reference signal resource has 8 ports, respectively: port 0#, port 1#, port 2#, port 3#, port 4#, port 5#, port 6#, and port 7#. If it is known that the port identifiers of the ports included in each port group are consecutive, and the starting port identifier of port group A is port 2#, then when the fourth configuration information configures that the number of ports included in group A is 3, the ports included in port group A are: port 2#, port 3#, and port 4#.

In some embodiments, if the port identifiers of the ports included in the port group corresponding to each port group identifier are non-consecutive, then the port identifiers in each port group are directly indicated through the second configuration information.

For example, the reference signal resource has 8 ports, respectively: port 0#, port 1#, port 2#, port 3#, port 4#, port 5#, port 6#, and port 7#. If it is known that the port identifiers of the ports included in each port group are non-consecutive, then the fourth configuration information may indicate that the ports included in port group A are: port 2#, port 4#, and port 5# (or other combination, etc.).

In some embodiments, the fourth configuration information may be information other than the first configuration information, or may be the first configuration information.

Thus, the correspondence between the port identifiers and the port group identifiers in the port information, and how the correspondence between the two identifiers is determined, can be clarified.

In some embodiments, terms such as "certain", "preset", "predetermined, "set", "indicated", "a certain", "any", "first", etc. may be used interchangeably; "certain A", "preset A", "predetermined A, "set A", "indicated A", "a certain A", "any A", "first A" may be interpreted as A pre-specified in a protocol, etc., or as A obtained through setting, configuration, indication, etc., or as specific A, a certain A, any A, first A, etc., but the disclosure is not limited thereto.

The method of configuring resource involved in the embodiments of the present disclosure may include at least one of steps S2101 to S2104. For example, step S2101 may be implemented as an independent embodiment, step S2102 may be implemented as an independent embodiment, step S2103 may be implemented as an independent embodiment, step S2104 may be implemented as an independent embodiment, and step S2101 + step S2102 + step S2103 + step S2104 may be implemented as an independent embodiment, but the disclosure is not limited thereto.

In some embodiments, step S2101 and step S2102 may be performed interchangeably in order or simultaneously; step S2102 and step S2103, step S2103 and step S2104 may be performed interchangeably in order or simultaneously.

In some embodiments, step S2101, step S2102, and step S2103 are optional, and in different embodiments, one or more of these steps may be omitted or replaced.

In some embodiments, step S2101, step S2102, and step S2104 are optional, and in different embodiments, one or more of these steps may be omitted or replaced.

In some embodiments, step S2101, step S2103, and step S2104 are optional, and in different embodiments, one or more of these steps may be omitted or replaced.

In some embodiments, step S2102, step S2103, and step S2104 are optional, and in different embodiments, one or more of these steps may be omitted or replaced.

In some embodiments, reference may be made to other optional implementations recorded before or after the specification corresponding to FIG. 2.

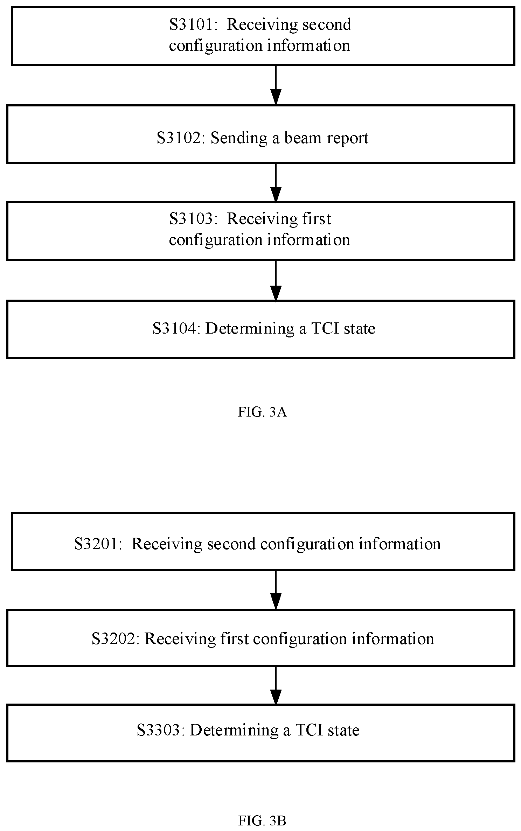

FIG. 3A is a flow diagram of the method of configuring resource according to an embodiment of the present disclosure. As shown in FIG. 3A, the method of configuring resource, involved in an embodiment of the present disclosure, includes following steps.

In Step S3101, the second configuration information is received.

For optional implementations of step S3101, reference may be made to the optional implementations of step S2101 in FIG. 2 and other related parts in the embodiment involved in FIG. 2, which are not repeated here.

In some embodiments, the terminal 101 receives the first configuration information sent by the access network device 102, but is not limited thereto. The terminal 101 may also receive the first configuration information sent by other entities.

In some embodiments, the terminal 101 obtains the first configuration information specified by a protocol.

In some embodiments, the terminal 101 obtains the first configuration information from an upper layer(s).

In some embodiments, the terminal 101 performs processing to obtain the first configuration information.

In some embodiments, step S3101 is omitted, and the terminal 101 autonomously implements the function indicated by the first configuration information, or the above function is default or preset.

In Step S3102, a beam report is sent.

For optional implementations of step S3102, reference may be made to the optional implementations of step S2102 in FIG. 2 and other related parts in the embodiment involved in FIG. 2, which are not repeated here.

In Step S3103, the first configuration information is received.

For optional implementations of step S3103, reference may be made to the optional implementations of step S2103 in FIG. 2 and other related parts in the embodiment involved in FIG. 2, which are not repeated here.

In Step S3104, the TCI state is determined.

For optional implementations of step S3104, reference may be made to the optional implementations of step S2104 in FIG. 2 and other related parts in the embodiment involved in FIG. 2, which are not repeated here.

The method of configuring resource involved in the embodiments of the present disclosure may include at least one of steps S3101 to S3104. For example, step S3101 may be implemented as an independent embodiment, step S3102 may be implemented as an independent embodiment, step S3103 may be implemented as an independent embodiment, step S3104 may be implemented as an independent embodiment, and step S3101 + step S3102 + step S3103 + step S3104 may be implemented as an independent embodiment, but the disclosure is not limited thereto.

In some embodiments, step S3101 and step S3102 may be interchanged in order or performed simultaneously; step S3102 and step S3103, step S3103 and step S3104 may be performed interchangeably in order or simultaneously.

In some embodiments, step S3101, step S3102, and step S3103 are optional, and in different embodiments, one or more of these steps may be omitted or replaced.

In some embodiments, step S3101, step S3102, and step S3104 are optional, and in different embodiments, one or more of these steps may be omitted or replaced.

In some embodiments, step S3101, step S3103, and step S3104 are optional, and in different embodiments, one or more of these steps may be omitted or replaced.

In some embodiments, step S3102, step S3103, and step S3104 are optional, and in different embodiments, one or more of these steps may be omitted or replaced.

FIG. 3B is a flow diagram of a method of configuring resource according to an embodiment of the present disclosure. As shown in FIG. 3B, the method of configuring resource, involved in an embodiment of the present disclosure, includes following steps.

In Step S3201, the second configuration information is received.

For optional implementations of step S3201, reference may be made to the optional implementations of step S2101 in FIG. 2, step S3101 in FIG. 3A, and other related parts in the embodiments involved in FIG. 2 and FIG. 3A, which are not repeated here.

In Step S3202, the first configuration information is received.

For optional implementations of step S3202, reference may be made to the optional implementations of step S2102 and step S2103 in FIG. 2, step S3102 and step S3103 in FIG. 3A, and other related parts in the embodiments involved in FIG. 2 and FIG. 3A, which are not repeated here.

In Step S3203, the TCI state is determined.

For optional implementations of step S3203, reference may be made to the optional implementations of step S2104 in FIG. 2, step S3104 in FIG. 3A, and other related parts in the embodiments involved in FIG. 2 and FIG. 3A, which are not repeated here.

The method of configuring resource involved in the embodiments of the present disclosure may include at least one of steps S3201 to S3203. For example, step S3201 may be implemented as an independent embodiment, step S3202 may be implemented as an independent embodiment, step S3203 may be implemented as an independent embodiment, and step S3201 + step S3202 + step S3203 may be implemented as an independent embodiment, but the disclosure is not limited thereto.

In some embodiments, step S3201 and step S3202 may be performed interchangeably in order or simultaneously; step S3202 and step S3203 may be performed interchangeably in order or simultaneously.

In some embodiments, step S3201 and step S3202 are optional, and in different embodiments, one or more of these steps may be omitted or replaced.

In some embodiments, step S3201 and step S3203 are optional, and in different embodiments, one or more of these steps may be omitted or replaced.

In some embodiments, step S3202 and step S3203 are optional, and in different embodiments, one or more of these steps may be omitted or replaced.

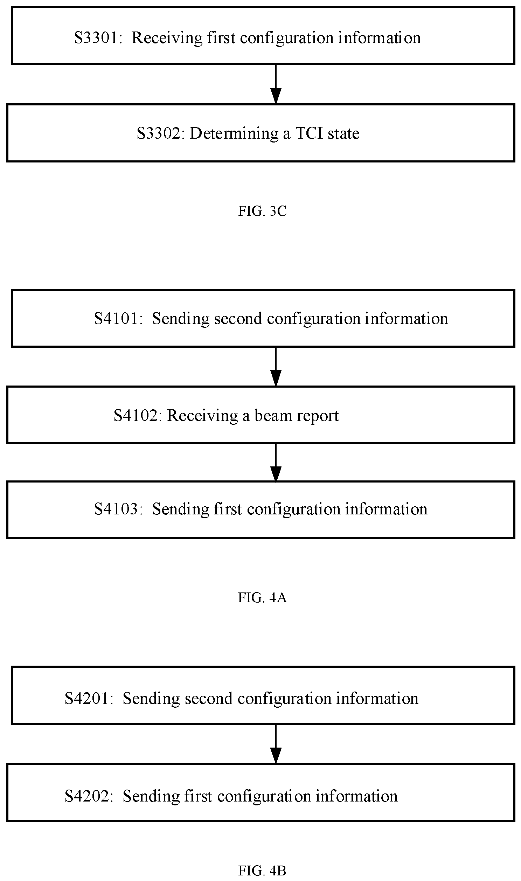

FIG. 3C is a flow diagram of a method of configuring resource according to an embodiment of the present disclosure. As shown in FIG. 3C, the method of configuring resource, involved in an embodiment of the present disclosure, includes following steps.

In Step S3301, the first configuration information is received.

In some embodiments, for optional implementations of step S3301, reference may be made to step S2101, step S2102, and step S2103 in FIG. 2, and the optional implementations of step S3101, step S3102, and step S3103 in FIG. 3A, step S3201 and step S3202 in FIG. 3B, and other related parts in the embodiments involved in FIG. 2, FIG. 3A, and FIG. 3B, which are not repeated here.

In Step S3302, the TCI state is determined.

In some embodiments, the TCI state corresponding to a first reference signal resource is determined based on the first configuration information, in which the first reference signal resource is a reference signal resource including a plurality of ports, and among the plurality of ports, at least two ports correspond to different TCI states.

In some embodiments, for optional implementations of step S3302, reference may be made to step S2104 in FIG. 2, and the optional implementations of step S3104 in FIG. 3A, step S3203 in FIG. 3B, and other related parts in the embodiments involved in FIG. 2, FIG. 3A, and FIG. 3B, which are not repeated here.

In some embodiments, the method further includes: receiving, by the terminal, second configuration information. The second configuration information is used to configure or indicate N sets of reference signal resources, or the second configuration information is used to configure or indicate a second reference signal resource including N ports, and N is an integer greater than or equal to 2. The method further includes: sending, by the terminal based on the second configuration information, a beam report based on a beam group. The beam report indicates at least one beam group, and at least two second reference signal resources included in the at least one beam group correspond to different sets of reference signal resources, or at least two ports included in the at least one beam group correspond to different port groups or different ports.

In some embodiments, the TCI state corresponding to the first reference signal resource includes: a TCI state corresponding to a port, and/or a TCI state corresponding to a port group.

In some embodiments, determining the TCI state corresponding to each port includes: the TCI state corresponding to the port. The TCI state corresponding to the port includes: the TCI state corresponding to a port indicated by the first configuration information, and/or the TCI state corresponding to a port indicated by the third configuration information, in which the third configuration information is different from the first configuration information, and the third configuration information is different from the first configuration information.

In some embodiments, the TCI state corresponding to the port group includes: a TCI state corresponding to a port group indicated by the first configuration information, and/or a TCI state corresponding to a port group indicated by third configuration information.

In some embodiments, the TCI state corresponding to the port group includes: a port identifier corresponding to the port group, in which the port identifier is determined based on a default rule, or the port identifier is determined based on fourth configuration information, and the fourth configuration information is different from the first configuration information.

In some embodiments, the port identifier is determined based on the default rule, which includes at least one of: a port group corresponding to each port group identifier includes N ports having consecutive port identifiers; a port group corresponding to each port group identifier includes N ports having equally spaced port identifiers; port identifiers included in a port group corresponding to each port group identifier are determined based on a protocol. N is an integer greater than or equal to 2.

In some embodiments, the port identifier is determined based on the fourth configuration information, which includes at least one of: the number of the ports included in each port group; the port identifiers of the ports included in each port group.

In some embodiments, each beam group in the beam report includes at least one of: K second reference signal resource identifiers; L port identifiers; M port group identifiers; a quality parameter. K is an integer less than or equal to N, L is an integer less than or equal to N, M is an integer less than or equal to N, the K second reference signal resource identifiers come from different sets of reference signal resources among the N sets of reference signal resources, and the L port identifiers come from different port groups among the N port groups.

In some embodiments, the second configuration information is further used for configuring at least one of: the beam group for uplink communication transmission; or the beam group for downlink communication transmission.

In some embodiments, the first reference signal resource includes: CSI-RS, or DMRS.

In some embodiments, the first configuration information is RRC signaling.

In some embodiments, the third configuration information includes at least one of: RRC signaling; MAC CE; DCI.

FIG. 4A is a flow diagram of a method of configuring resource according to an embodiment of the present disclosure. As shown in FIG. 4A, the method of configuring resource, involved in an embodiment of the present disclosure, includes following steps.

In Step S4101, the second configuration information is sent.

For optional implementations of step S4101, reference may be made to the optional implementations of step S2101 in FIG. 2 and other related parts in the embodiment involved in FIG. 2, which are not repeated here.

In Step S4102, the beam report is received.

For optional implementations of step S4102, reference may be made to the optional implementations of step S2102 in FIG. 2 and other related parts in the embodiment involved in FIG. 2, which are not repeated here.

In Step S4103, the first configuration information is sent.

For optional implementations of step S4103, reference may be made to the optional implementations of step S2103 in FIG. 2 and other related parts in the embodiment involved in FIG. 2, which are not repeated here.

The method of configuring resource involved in the embodiments of the present disclosure may include at least one of steps S4101 to S4103. For example, step S4101 may be implemented as an independent embodiment, step S4102 may be implemented as an independent embodiment, step S4103 may be implemented as an independent embodiment, and step S4101 + step S4102 + step S4103 may be implemented as an independent embodiment, but the disclosure is not limited thereto.

In some embodiments, step S4101 and step S4102 may be performed interchangeably in order or simultaneously; step S4102 and step S4103 may be performed interchangeably in order or simultaneously.

In some embodiments, step S4101 and step S4102 are optional, and in different embodiments, one or more of these steps may be omitted or replaced.

In some embodiments, step S4101 and step S4103 are optional, and in different embodiments, one or more of these steps may be omitted or replaced.

In some embodiments, step S4102 and step S4103 are optional, and in different embodiments, one or more of these steps may be omitted or replaced.

FIG. 4B is a flow diagram of a method of configuring resource according to an embodiment of the present disclosure. As shown in FIG. 4B, the method of configuring resource, involved in an embodiment of the present disclosure, includes following steps.

In Step S4201, the second configuration information is sent.

For optional implementations of step S4201, reference may be made to the optional implementations of step S2101 in FIG. 2, step S4101 in FIG. 4A, and other related parts in the embodiments involved in FIG. 2 and FIG. 4A, which are not repeated here.

In Step S4202, the first configuration information is sent.

For optional implementations of step S4202, reference may be made to the optional implementations of step S2102 and step S2103 in FIG. 2, step S4102 and step S4103 in FIG. 4A, and other related parts in the embodiments involved in FIG. 2 and FIG. 4A, which are not repeated here.

The method of configuring resource involved in the embodiments of the present disclosure may include at least one of steps S4201 to S4202. For example, step S4201 may be implemented as an independent embodiment, step S4202 may be implemented as an independent embodiment, and step S4201 + step S4202 may be implemented as an independent embodiment, but the disclosure is not limited thereto.

In some embodiments, step S4201 and step S3102 may be performed interchangeably in order or simultaneously.

In some embodiments, step S4201 is optional, and in different embodiments, one or more of these steps may be omitted or replaced.

In some embodiments, step S4202 is optional, and in different embodiments, one or more of these steps may be omitted or replaced.

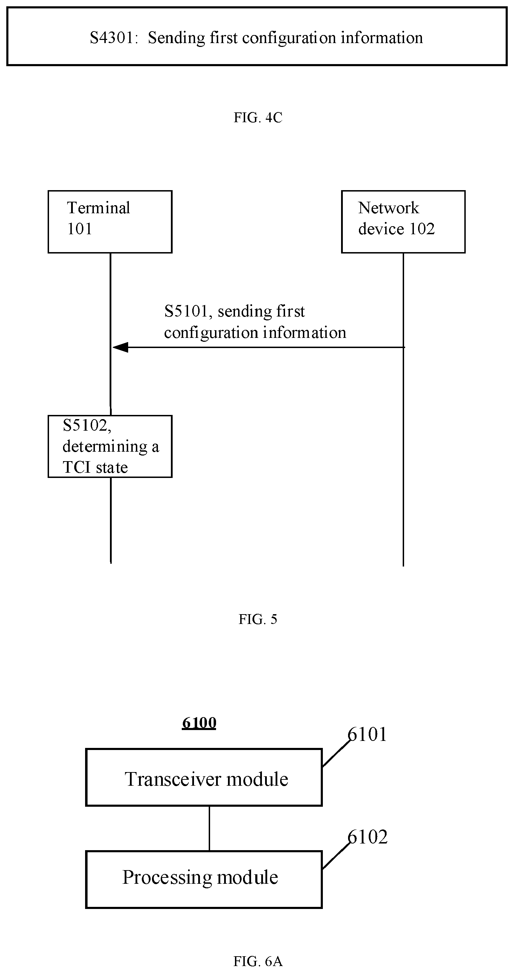

FIG. 4C is a flow diagram of a method of configuring resource according to an embodiment of the present disclosure. As shown in FIG. 4C, the method of configuring resource, involved in an embodiment of the present disclosure, includes following steps.

In Step S4301, the first configuration information is sent.

In some embodiments, for optional implementations of step S4301, reference may be made to step S2101, step S2102, and step S2103 in FIG. 2, the optional implementations of step S4101, step S4102, and step S4103 in FIG. 4A, step S4201 and step S4202 in FIG. 4B, and other related parts in the embodiments involved in FIG. 2, FIG. 4A, and FIG. 4B, which are not repeated here.

In some embodiments, the first configuration information is used to determine a TCI state corresponding to a first reference signal resource, in which the first reference signal resource is a reference signal resource including a plurality of ports, and among the plurality of ports, at least two ports correspond to different TCI states.

In some embodiments, the method further includes: sending second configuration information. The second configuration information is used to configure or indicate N sets of reference signal resources, or the second configuration information is used to configure or indicate a second reference signal resource including N ports, and N is an integer greater than or equal to 2. The method further includes: receiving a beam report, which is sent by a terminal based on the second configuration information. The beam report indicates at least one beam group, and at least two second reference signal resources included in the at least one beam group correspond to different sets of reference signal resources, or at least two ports included in the at least one beam group correspond to different port groups or different ports.

In some embodiments, the TCI state corresponding to the first reference signal resource includes: a TCI state corresponding to a port, and/or a TCI state corresponding to a port group.

In some embodiments, the TCI state corresponding to the port includes: a TCI state corresponding to a port indicated by the first configuration information, and/or a TCI state corresponding to a port indicated by third configuration information, and the third configuration information is different from the first configuration information.

In some embodiments, the TCI state corresponding to the port group includes: a TCI state corresponding to a port group indicated by the first configuration information, and/or a TCI state corresponding to a port group indicated by third configuration information.

In some embodiments, the TCI state corresponding to the port group includes: a port identifier corresponding to the port group. The port identifier is determined based on a default rule, or the port identifier is determined based on fourth configuration information. The fourth configuration information is different from the first configuration information.

In some embodiments, each beam group in the beam report includes at least one of: K second reference signal resource identifiers; L port identifiers; M port group identifiers; a quality parameter. K is an integer less than or equal to N, L is an integer less than or equal to N, M is an integer less than or equal to N, the K second reference signal resource identifiers come from different sets of reference signal resources among the N sets of reference signal resources, and the L port identifiers come from different port groups among the N port groups.

In some embodiments, the second configuration information is further used for configuring at least one of: the beam group for uplink communication transmission; or the beam group for downlink communication transmission.

In some embodiments, the first reference signal resource includes: CSI-RS, or DMRS.

In some embodiments, the first configuration information is RRC signaling.

In some embodiments, the third configuration information includes at least one of: RRC signaling; MAC CE; DCI.

FIG. 5 is an interaction diagram of a method of configuring resource according to an embodiment of the present disclosure. As shown in FIG. 5, the method of configuring resource, involved in an embodiment of the present disclosure, includes following steps.

In Step S5101, the network device sends first configuration information.

For optional implementations of step S5101, reference may be made to the optional implementations of step S2101, step S2102, and step S2103 in FIG. 2, and other related parts in the embodiment involved in FIG. 2, which are not repeated here.

In Step S5102, The terminal determines a transmission configuration indication (TCI) state corresponding to a first reference signal resource.

In some embodiments, based on the first configuration information, a TCI state corresponding to a first reference signal resource is determined, in which the first reference signal resource is a reference signal resource including a plurality of ports, and among the plurality of ports, at least two ports correspond to different TCI states.

For optional implementations of step S5101, reference may be made to the optional implementations of step S2104 in FIG. 2, and other related parts in the embodiment involved in FIG. 2, which are not repeated here.

In some embodiments, the above method may also include the methods of the above communication system side, terminal side, network device side, and other embodiments, which are not repeated here.

In some embodiments, the embodiments of the present disclosure also propose a communication method, enabling a single reference signal resource to be communicated based on a plurality of transmit beams of a base station and/or a plurality of receive beams of a terminal, so that based on the single reference signal, a near-field terminal can perform CSI measurement and feedback based on the plurality of transmit and receive beams, reducing signaling overhead and improving transmission performance.

In some embodiments, the terminal receives the first configuration information. The first configuration information includes reference signal resource configuration information, and the reference signal resource corresponds to a plurality of ports. A TCI state corresponding to the reference signal resource is determined, and at least two ports among the other plurality of ports correspond to different TCI states.

In some embodiments, determining the TCI state corresponding to the reference signal resource includes: determining the TCI state corresponding to each port, indicated by the first configuration information or other configuration information.

In some embodiments, determining the TCI state corresponding to the reference signal resource includes: determining the TCI state corresponding to each port group, indicated by the first configuration information or other configuration information.

Optionally, the port identifiers included in each port group are determined : based on a default rule, or based on configuration information.

For example, determination based on the default rule includes: each port group includes N consecutive ports; each port group includes N equally spaced ports; or the ports included in each port group are specified by the protocol.

If determined based on the default rule, the reference signal resource or channel may not need to occupy all ports in each port group. For example, if a port group includes ports 0, 1, and 2, the reference signal and channel may only occupy 0, or 0 and 1, etc.

For example, determination based on the configuration information includes: if the included ports are consecutive, the number of the ports included in each port group is configured, and the starting port identifier is determined by default; if the included ports are non-consecutive, the port identifier (index) of the ports included in each port group is directly indicated.

It can be understood that, a single reference signal (and/or channel) corresponds to a plurality of TCI states, and the plurality of TCI states need to be simultaneously receivable by a terminal. Therefore, before the reception, the terminal also needs to report which beams can be simultaneously received by the terminal. In the conventional case, the set of reference signal resources that the terminal reports as being capable of simultaneous reception includes only two reference signal resource IDs. In other words, the terminal only informs the base station which two reference signal resources correspond to transmit beams of the base station that can be simultaneously received by the terminal, or informs the base station which two reference signal resources correspond to transmit beams that the terminal can simultaneously transmit. Moreover, what is reported in the beam group is reference signal resource IDs. In large-scale antenna scenarios, the base station may be able to simultaneously send more transmit beams, and the reference signal resource for beam measurement can be sent based on more ports, and different ports may also correspond to different transmit beams. Therefore, the group based beam report needs to be enhanced, including the following enhancements:

In some embodiments, the terminal receives the second configuration information, which includes reference signal resource configuration information. The reference signal resource configuration information includes N sets of reference signal resources, or a reference signal resource includes N port groups, and N is an integer greater than or equal to 2.

In some embodiments, based on the second configuration information, the terminal performs a beam group report. Each beam group includes at most N reference signal resource IDs or N port IDs, and L1-RSRP/L1-SINR corresponding to the corresponding reference signal resource IDs, or L1-RSRP/L1-SINR corresponding to the corresponding port IDs. The N reference signal resources come from different sets of reference signal resources, or the N ports come from different port groups.

In some embodiments, in addition, the second configuration information may also configure the beam group for uplink, downlink, or both uplink and downlink. If it is not indicated in the second configuration information, the terminal may report each beam group as usable for uplink, downlink, or both uplink and downlink.

In some embodiments, the reference signal resource includes CSI-RS, or DMRS.

In some embodiments, the first configuration information is RRC, and the other configuration information is RRC, MAC CE, or DCI.

It should be noted that at least two ports among the plurality of ports correspond to different TCI states, meaning the TCI states ultimately corresponding to the two ports for transmission are different. For example, when the TCI state configuration procedure is RRC + MAC CE, RRC configures a TCI state list, while MAC CE activates the TCI state corresponding to each port for transmission; the TCI state ultimately used for transmission referred to herein is the TCI state activated by MAC CE. As another example, when the TCI state configuration procedure is RRC + MAC CE + DCI, RRC configures a TCI state list, while MAC CE activates the correspondence between a plurality of TCI states and codepoints of a TCI indication field in DCI, and DCI further indicates the codepoint of the TCI indication field. In this case, the TCI state corresponding to the codepoint indicated by DCI is the TCI state ultimately used for transmission. In addition, there is also the unified TCI state procedure, i.e., the above two procedures only indicate the unified TCI state. For the reference signal resource in the above embodiments, additional signaling is also needed to indicate which one of the plurality of unified TCI states corresponds to each reference signal resource or set of reference signal resources. The additional signaling may also be RRC, MAC CE, or DCI, and what is determined by this additional signaling is the TCI state ultimately used for transmission. That is, in the configuration procedure of the TCI states of the two ports, the TCI states corresponding in the preceding processes may all be the same, while the TCI states ultimately used for transmission are different.

In the embodiments of the present disclosure, some or all steps and their optional implementations may be arbitrarily combined with some or all steps in other embodiments, and may also be arbitrarily combined with optional implementations of other embodiments.

Embodiments of the disclosure also provide an apparatus for implementing any one of the above methods. For example, an apparatus is provided, including units for performing the steps executed by the terminal in any one of the above methods. Further, another apparatus is provided, including units or modules for performing the steps executed by the network device (for example, the access network device, the core network function node, the core network device, etc.) in any one of the above methods.

It should be understood that a division of units in the above apparatus is only a division of logical functions. In actual implementations, they may be fully or partially integrated into one physical entity, or may be physically separated. In addition, the units or the modules in the apparatus may be implemented in a form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in a form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in a form of software called by the processor, or fully implemented in a form of the hardware circuit, or partially implemented in a form of software called by the processor and partially implemented in a form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 6A is a structural schematic diagram of a terminal according to an embodiment of the present disclosure. As shown in FIG. 6A, a terminal 6100 may include: at least one of a transceiver module 6101, a processing module 6102, and the like. In some embodiments, the above transceiver module is configured to receive first configuration information. Optionally, the above transceiver module is configured to perform at least one of the communication steps such as sending and/or receiving performed by the terminal 101 in any of the above methods (e.g., step S2101, step S2102, step S2103, but not limited thereto), which are not repeated here. The above processing module is configured to determine, based on the first configuration information, a TCI state corresponding to a first reference signal resource. The first reference signal resource is a reference signal resource including a plurality of ports, and among the plurality of ports, at least two ports correspond to different TCI states. Optionally, the above processing module is configured to perform at least one of the other steps performed by the terminal 101 in any of the above methods (e.g., step S2104, but not limited thereto), which are not repeated here.

In some embodiments, the transceiver module 6101 is further configured to: receive second configuration information. The second configuration information is used to configure N sets of reference signal resources, or the second configuration information is used to configure a second reference signal resource including N ports. N is an integer greater than or equal to 2.

In some embodiments, the processing module 6102 is further configured to process based on the second configuration information.

In some embodiments, the transceiver module 6101 is further configured to: send a beam report based on a beam group, and the beam report indicates at least one beam group, and at least two second reference signal resources included in the at least one beam group correspond to different sets of reference signal resources, or at least two ports included in the at least one beam group correspond to different port groups or different ports.

In some embodiments, the TCI state corresponding to the first reference signal resource includes: a TCI state corresponding to a port, and/or a TCI state corresponding to a port group.

In some embodiments, the TCI state corresponding to the port includes: a TCI state corresponding to a port indicated by the first configuration information, and/or a TCI state corresponding to a port indicated by third configuration information. The third configuration information is different from the first configuration information. The third configuration information is different from the first configuration information.

In some embodiments, the TCI state corresponding to the port group includes: a TCI state corresponding to a port group indicated by the first configuration information, and/or a TCI state corresponding to a port group indicated by third configuration information.

In some embodiments, the TCI state corresponding to the port group includes: a port identifier corresponding to the port group. The port identifier is determined based on a default rule, or the port identifier is determined based on fourth configuration information. The fourth configuration information is different from the first configuration information.

In some embodiments, the port identifier is determined based on the default rule, which includes at least one of: a port group corresponding to each port group identifier includes N ports having consecutive port identifiers; a port group corresponding to each port group identifier includes N ports having equally spaced port identifiers; port identifiers included in a port group corresponding to each port group identifier are determined based on a protocol, and N is an integer greater than or equal to 2.

In some embodiments, the port identifier is determined based on the fourth configuration information, which includes at least one of: a number of the ports included in each port group; the port identifiers of the ports included in each port group.

In some embodiments, each beam group in the beam report includes at least one of: K second reference signal resource identifiers; L port identifiers; M port group identifiers; a quality parameter. K is an integer less than or equal to N, L is an integer less than or equal to N, M is an integer less than or equal to N. The K second reference signal resource identifiers come from different sets of reference signal resources among the N sets of reference signal resources, and the L port identifiers come from different port groups among the N port groups.

In some embodiments, the second configuration information is further used for configuring at least one of: the beam group for uplink communication transmission; the beam group for downlink communication transmission.

In some embodiments, the first reference signal resource includes: CSI-RS, or DMRS.

In some embodiments, the first configuration information is RRC signaling.

In some embodiments, the third configuration information includes at least one of: RRC signaling; MAC CE; DCI.

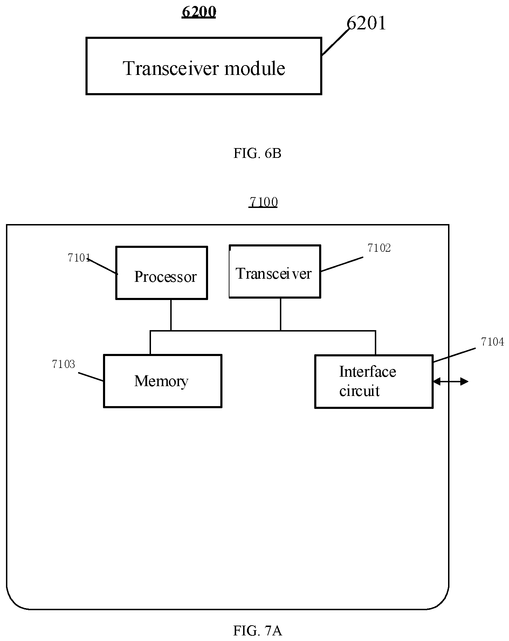

FIG. 6B is a structural schematic diagram of a network device according to an embodiment of the present disclosure. As shown in FIG. 6B, a network device 6200 may include: at least one of a transceiver module 6201 and the like. In some embodiments, the above transceiver module is configured to send first configuration information, and the first configuration information is used to determine a TCI state corresponding to a first reference signal resource. The first reference signal resource is a reference signal resource including a plurality of ports, and among the plurality of ports, at least two ports correspond to different TCI states. Optionally, the above transceiver module is configured to perform at least one of the communication steps such as sending and/or receiving performed by the terminal 101 in any of the above methods (e.g., step S2101, step S2102, step S2103, but not limited thereto), which are not repeated here.

In some embodiments, the transceiver module 6201 is further configured to: send second configuration information, the second configuration information is used to configure N sets of reference signal resources, or the second configuration information is used to configure a second reference signal resource including N ports. N is an integer greater than or equal to 2; receive a beam report, and the beam report is sent by a terminal based on the second configuration information, the beam report indicates at least one beam group, and at least two second reference signal resources included in the at least one beam group correspond to different sets of reference signal resources, or at least two ports included in the at least one beam group correspond to different port groups or different ports.

In some embodiments, the TCI state corresponding to the first reference signal resource includes: a TCI state corresponding to a port, and/or a TCI state corresponding to a port group.

In some embodiments, the TCI state corresponding to the port includes: a TCI state corresponding to a port indicated by the first configuration information, and/or a TCI state corresponding to a port indicated by third configuration information. The third configuration information is different from the first configuration information.

In some embodiments, the TCI state corresponding to the port group includes: a TCI state corresponding to a port group indicated by the first configuration information, and/or a TCI state corresponding to a port group indicated by third configuration information.

In some embodiments, the TCI state corresponding to the port group includes: a port identifier corresponding to the port group. The port identifier is determined based on a default rule, or the port identifier is determined based on fourth configuration information. The fourth configuration information is different from the first configuration information.

In some embodiments, each beam group in the beam report includes at least one of: K second reference signal resource identifiers; L port identifiers; M port group identifiers; a quality parameter. K is an integer less than or equal to N, L is an integer less than or equal to N, M is an integer less than or equal to N. The K second reference signal resource identifiers come from different sets of reference signal resources among the N sets of reference signal resources, and the L port identifiers come from different port groups among the N port groups.

In some embodiments, the second configuration information is further used for configuring at least one of: the beam group for uplink communication transmission; the beam group for downlink communication transmission.

In some embodiments, the first reference signal resource includes: CSI-RS, or DMRS.

In some embodiments, the first configuration information is RRC signaling.

In some embodiments, the third configuration information includes at least one of: RRC signaling; MAC CE; DCI.

In some embodiments, the transceiver module may include a sending module and/or a receiving module, and the sending module and the receiving module may be separate or integrated together. Optionally, the transceiver module and the transceiver can be used interchangeably.

FIG. 7A is a structural schematic diagram of a communication device 7100 according to an embodiment of the disclosure. The communication device 7100 may be a network device (such as an access network device, a core network device, etc.), or a terminal (such as a UE, etc.), or a chip, a chip system, a processor, etc. that supports the network device to implement any one of the methods, or a chip, a chip system, a processor, etc. that supports the terminal to implement any one of the methods. The communication device 7100 may be configured to implement the method in the above method embodiments. For details, please refer to the description in the above method embodiments.

As shown in FIG. 7A, the communication device 7100 may include one or more processors 7101. The processor 7101 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data. The processor 7101 is configured to call instructions so that the communication device 7100 may implement any one of the above methods.

In some embodiments, the communication device 7100 further includes one or more transceivers 7102. When the communication device 7100 includes one or more transceivers 7102, the transceiver 7102 performs at least one of the communication steps such as sending and/or receiving in the above methods (e.g., step S2101, step S2102, step S2103, but not limited thereto), and the processor 7101 performs at least one of the other steps (e.g., step S2104, but not limited thereto). In an optional embodiment, the transceiver may include a receiver and/or a transmitter, and the receiver and the transmitter may be separate or integrated together. Optionally, terms such as transceiver, transceiver unit, transceiver machine, transceiver circuit, interface circuit, interface, etc. can be used interchangeably; terms such as transmitter, sending unit, transmitting machine, sending circuit, etc. can be used interchangeably; terms such as receiver, receiving unit, receiver machine, receiving circuit, etc. can be used interchangeably.

In some embodiments, the communication device 7100 further includes one or more memories 7103 for storing data. Optionally, all or part of the memory 7103 may also be located outside the communication device 7100. In an optional embodiment, the communication device 7100 may include one or more interface circuits 7104. Optionally, the interface circuit 7104 is connected to the memory 7103. The interface circuit 7104 may be used to receive data from the memory 7103 or other devices, and may be used to send data to the memory 7103 or other devices. For example, the interface circuit 7104 may read data stored in the memory 7103 and send the data to the processor 7101.

The communication device 7100 described in the above embodiment may be a network device or a terminal, but the scope of the communication device 7100 described in the present disclosure is not limited thereto. The structure of the communication device 7100 may not be limited by FIG. 7A. The communication device may be a stand-alone device or may be a part of a larger device. For example, the communication device may be the following: (1) a stand-alone integrated circuit (IC), or a chip, or a system on chip or a subsystem; (2) a set of one or more ICs, optionally, which may also include a storage component for storing data and a computer program; (3) an ASIC, such as a Modem; (4) a module that may be embedded within other devices; (5) a receiver, a terminal, a smart terminal device, a cellular phone, a wireless device, a handset, a mobile unit, a vehicle-mounted device, a network side device, a cloud device, an artificial intelligence device, etc.; (6) others, and so forth.

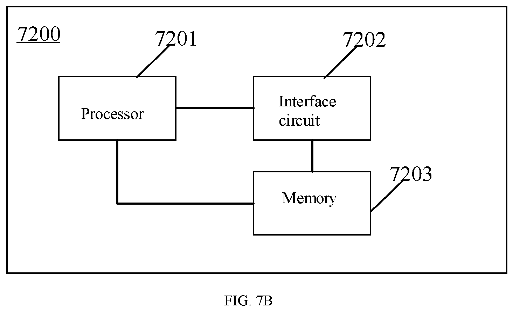

FIG. 7B is a structural schematic diagram of a chip 7200 according to an embodiment of the present disclosure. For the case where the communication device 7100 may be a chip or a chip system, reference may be made to the structural schematic diagram of the chip 7200 shown in FIG. 7B, but the disclosure is not limited thereto.

The chip 7200 includes one or more processors 7201. The chip 7200 is configured to perform any of the above methods.

In some embodiments, the chip 7200 further includes one or more interface circuits 7202. Optionally, terms such as interface circuit, interface, transceiver pin, etc. can be used interchangeably. In some embodiments, the chip 7200 further includes one or more memories 7203 for storing data. Optionally, all or part of the memory 7203 may be external to the chip 7200. Optionally, the interface circuit 7202 is connected to the memory 7203. The interface circuit 7202 may be used to receive data from the memory 7203 or other devices, and the interface circuit 7202 may be used to send data to the memory 7203 or other devices. For example, the interface circuit 7202 may read data stored in the memory 7203 and send the data to the processor 7201.

In some embodiments, the interface circuit 7202 performs at least one of the communication steps such as sending and/or receiving in the above methods (e.g., step S2101, step S2102, step S2103, but not limited thereto). The interface circuit 7202 performing the communication steps such as sending and/or receiving in the above methods means, for example: the interface circuit 7202 performs data interaction between the processor 7201, the chip 7200, the memory 7203, or a transceiver device. In some embodiments, the processor 7201 performs at least one of the other steps (e.g., step S2104, but not limited thereto).

The modules and/or means described in the various embodiments such as virtual apparatuses, physical apparatuses, chips, etc. may be arbitrarily combined or separated depending on the situation. Optionally, some or all steps may also be collaboratively performed by a plurality of modules and/or means, which is not limited here.

The present disclosure also proposes a storage medium for storing instructions. When the instructions are running on the communication device 7100, the communication device 7100 is caused to implement any one of the above methods. Optionally, the above storage medium is an electronic storage medium. Optionally, the above storage medium is a computer-readable storage medium, which is not limited herein. The above storage medium may also be a storage medium readable by other devices. Optionally, the above storage medium may be a non-transitory storage medium, which is not limited to herein. The above storage medium may also be a transitory storage medium.

The present disclosure also proposes a program product. When the program product is executed by a communication device 7100, the program product causes the communication device 7100 to perform any of the above methods. Optionally, the above program product is a computer program product.

The present disclosure also proposes a computer program. When the computer program is running on a computer, the computer is caused to implement any one of the above methods.

## Claims

1. A method of configuring resource, comprising:
receiving, by a terminal, first configuration information; and
determining, based on the first configuration information, a transmission configuration indication (TCI) state corresponding to a first reference signal resource, wherein the first reference signal resource is a reference signal resource comprising a plurality of ports, and among the plurality of ports, at least two ports correspond to different TCI states.

2. The method according to claim 1, further comprising:
receiving, by the terminal, second configuration information, wherein the second configuration information is used to configure N sets of reference signal resources, or the second configuration information is used to configure a second reference signal resource comprising N ports, wherein N is an integer greater than or equal to 2; and
sending, by the terminal based on the second configuration information, a beam report based on a beam group, wherein the beam report indicates at least one beam group, and at least two second reference signal resources comprised in the at least one beam group correspond to different sets of reference signal resources, or at least two ports comprised in the at least one beam group correspond to different groups of ports or different ports.

3. The method according to claim 1, wherein the TCI state corresponding to the first reference signal resource comprises: a TCI state corresponding to a port, and/or a TCI state corresponding to a port group.

4. The method according to claim 3, wherein the TCI state corresponding to the port comprises:
a TCI state corresponding to a port indicated by the first configuration information, and/or
a TCI state corresponding to a port indicated by third configuration information, wherein the third configuration information is different from the first configuration information.

5. The method according to claim 3, wherein the TCI state corresponding to the port group comprises:
a TCI state corresponding to a port group indicated by the first configuration information, and/or
a TCI state corresponding to a port group indicated by third configuration information.

6. The method according to claim 3, wherein the TCI state corresponding to the port group comprises: a port identifier corresponding to the port group, wherein the port identifier is determined based on a default rule, or the port identifier is determined based on fourth configuration information, wherein the fourth configuration information is different from the first configuration information.

7. The method according to claim 6, wherein the port identifier is determined based on the default rule, which comprises at least one of:
a port group corresponding to a port group identifier comprises N ports having consecutive port identifiers;
a port group corresponding to a port group identifier comprises N ports having equally spaced port identifiers; or
port identifiers comprised in a port group corresponding to a port group identifier are determined based on a protocol,
wherein N is an integer greater than or equal to 2.

8. The method according to claim 6, wherein the port identifier is determined based on the fourth configuration information, which comprises at least one of:
a number of the ports comprised in each port group; or
the port identifiers of the ports comprised in each port group.

9. The method according to claim 2, wherein each beam group in the beam report comprises at least one of:
K second reference signal resource identifiers;
L port identifiers;
M port group identifiers; or
a quality parameter,
wherein K is an integer less than or equal to N, L is an integer less than or equal to N, M is an integer less than or equal to N, the K second reference signal resource identifiers come from different sets of reference signal resources among the N sets of reference signal resources, and the L port identifiers come from different port groups among the N port groups.

10. The method according to claim 2, wherein the second configuration information is further used for at least one of:
configuring the beam group for uplink communication transmission; or
configuring the beam group for downlink communication transmission.

11. The method according to any one of claims 1 to 10, wherein the first reference signal resource comprises:
a channel state information reference signal (CSI-RS), or
a demodulation reference signal (DMRS).

12. The method according to any one of claims 1 to 11, wherein the first configuration information is radio resource control (RRC) signaling.

13. The method according to claim 5, wherein the third configuration information comprises at least one of:
RRC signaling;
a medium access control control element (MAC CE); or
downlink control information (DCI).

14. A method of configuring resource, comprising:
sending, by a network device, first configuration information, wherein the first configuration information is used to determine a transmission configuration indication (TCI) state corresponding to a first reference signal resource, wherein the first reference signal resource is a reference signal resource comprising a plurality of ports, and among the plurality of ports, at least two ports correspond to different TCI states.

15. The method according to claim 14, further comprising:
sending, by the network device, second configuration information, wherein the second configuration information is used to configure N sets of reference signal resources, or the second configuration information is used to configure a second reference signal resource comprising N ports, wherein N is an integer greater than or equal to 2; and
receiving, by the network device, a beam report, wherein the beam report is sent by a terminal based on the second configuration information, the beam report indicates at least one beam group, and at least two second reference signal resources comprised in the at least one beam group correspond to different sets of reference signal resources, or at least two ports comprised in the at least one beam group correspond to different port groups or different ports.

16. The method according to claim 14, wherein the TCI state corresponding to the first reference signal resource comprises: a TCI state corresponding to a port, and/or a TCI state corresponding to a port group.

17. The method according to claim 16, wherein the TCI state corresponding to the port comprises:
a TCI state corresponding to a port indicated by the first configuration information, and/or
a TCI state corresponding to a port indicated by third configuration information, wherein the third configuration information is different from the first configuration information.

18. The method according to claim 16, wherein the TCI state corresponding to the port group comprises:
a TCI state corresponding to a port group indicated by the first configuration information, and/or
a TCI state corresponding to a port group indicated by third configuration information.

19. The method according to claim 16, wherein the TCI state corresponding to the port group comprises:
a port identifier corresponding to the port group, wherein the port identifier is determined based on a default rule, or the port identifier is determined based on fourth configuration information, wherein the fourth configuration information is different from the first configuration information.

20. The method according to claim 15, wherein each beam group in the beam report comprises at least one of:
K second reference signal resource identifiers;
L port identifiers;
M port group identifiers; or
a quality parameter,
wherein K is an integer less than or equal to N, L is an integer less than or equal to N, M is an integer less than or equal to N, the K second reference signal resource identifiers come from different sets of reference signal resource among the N sets of reference signal resource, and the L port identifiers come from different port groups among the N port groups.

21. The method according to claim 15, wherein the second configuration information is further used for at least one of:
configuring the beam group for uplink communication transmission; or
configuring the beam group for downlink communication transmission.

22. The method according to any one of claims 14 to 21, wherein the first reference signal resource comprises: a channel state information reference signal (CSI-RS), or a demodulation reference signal (DMRS).

23. The method according to any one of claims 14 to 22, wherein the first configuration information is radio resource control (RRC) signaling.

24. The method according to claim 18, wherein the third configuration information comprises at least one of:
RRC signaling;
a medium access control control element (MAC CE); or
downlink control information (DCI).

25. A method of configuring resource, comprising:
sending, by a network device, first configuration information;
receiving, by a terminal, the first configuration information; and
determining, by the terminal based on the first configuration information, a transmission configuration indication (TCI) state corresponding to a first reference signal resource, wherein the first reference signal resource is a reference signal resource comprising a plurality of ports, and among the plurality of ports, at least two ports correspond to different TCI states.

26. A terminal, comprising:
a transceiver module configured to receive first configuration information; and
a processing module configured to determine, based on the first configuration information, a transmission configuration indication (TCI) state corresponding to a first reference signal resource, wherein the first reference signal resource is a reference signal resource comprising a plurality of ports, and among the plurality of ports, at least two ports correspond to different TCI states.

27. A network device, comprising:
a transceiver module configured to send first configuration information, wherein the first configuration information is used to determine a transmission configuration indication (TCI) state corresponding to a first reference signal resource, wherein the first reference signal resource is a reference signal resource comprising a plurality of ports, and among the plurality of ports, at least two ports correspond to different TCI states.

28. A terminal, comprising: one or more processors, wherein the one or more processors are configured to execute the method of configuring resource according to any one of claims 1 to 13.

29. A network device, comprising: one or more processors, wherein the one or more processors are configured to execute the method of configuring resource according to any one of claims 14 to 24.

30. A communication system, comprising: a terminal and a network device, wherein the terminal is configured to implement the method of configuring resource according to any one of claims 1 to 13, and the network device is configured to implement the method of configuring resource according to any one of claims 14 to 24.

31. A storage medium storing instructions which, when executed on a communication device, causes the communication device to perform the method of configuring resource according to any one of claims 1 to 13 or the method of configuring resource according to any one of claims 14 to 24.
